# EUROPEAN PATENT APPLICATION

(11) **EP 4 167 003 A1**
(43) Date of publication of application: **19.04.2023**
(21) Application number: 21825383.9
(22) Date of filing: 10.06.2021
(51) Int. Cl.: G02B 6/36

(54) **CONNECTOR MEMBER AND METHOD FOR ASSEMBLING SAME**

(30) Priority: 15.06.2020 JP 2020103273
(71) Applicant: Nitto Denko Corporation, Ibaraki-shi Osaka 567-8680 (JP)
(72) Inventor: TSUDA, Koichi, Ibaraki-shi, Osaka 567-8680 (JP); SHIMIZU, Yusuke, Ibaraki-shi, Osaka 567-8680 (JP); FUKUURA, Nobuhiro, Ibaraki-shi, Osaka 567-8680 (JP)
(74) Representative: Hoffmann Eitle
(86) International application number: PCT/JP2021/022128
(87) International publication number: WO 2021/256374

(57) **Abstract**

A connector member (1) fixes an optical fiber (2). The connector member (1) includes an optical fiber (2); a clamping member (3) that clamps the optical fiber (2); and a friction imparting member (4) that is interposed between the optical fiber (2) and the clamping member (3).

## Description

### TECHNICAL FIELD

The present invention relates to a connector member, and an assembly method for the same.

### BACKGROUND ART

Conventionally, an optical connector that fixes an optical fiber has been known.

For example, an optical connector that includes a connector body having a conical hole, and a core wire fixing unit housed in the conical hole has been proposed (see, for example, Patent Document 1 below). The core wire fixing unit of the optical connector described in Patent Document 1 includes a temporarily fixing chuck having a cylindrical shape; a fixing chuck having a cylindrical shape corresponding to the conical hole; and a nut. An optical fiber is inserted into the temporarily fixing chuck, the fixing chuck, and the nut, and the nut fastens the temporarily fixing chuck to thereby temporarily fix the optical fiber by the temporarily fixing chuck. The fixing chuck is then fitted in the conical hole of the connector body, so that the core wire fixing unit finally fixes the optical fiber.

### Citation List

### Patent Document

Patent Document 1: Japanese Unexamined Patent Publication No. 2018-180106

### SUMMARY OF THE INVENTION

### PROBLEM TO BE SOLVED BY THE INVENTION

However, there is a disadvantage that a large number of components described in Patent Document 1 are used, so that the configuration is complex.

In addition, fixing of the optical fiber is disadvantageously complicated.

The present invention provides a connector member having a simple configuration, and an assembly method for the connector member capable of conveniently fixing an optical fiber.

### MEANS FOR SOLVING THE PROBLEM

The present invention (1) includes a connector member that fixes an optical fiber, the connector member including the optical fiber; a clamping member that clamps the optical fiber; and a friction imparting member interposed between the optical fiber and the clamping member, the friction imparting member configured to impart friction force to the optical fiber, the friction force preventing the optical fiber from moving in a longitudinal direction.

In the connector member, the friction imparting member can impart friction force to the optical fiber, the friction force preventing the optical fiber from moving in the longitudinal direction. This allows the clamping member to securely fix the optical fiber. Further, the connector member has a simple configuration that includes the clamping member and the friction imparting member.

The present invention (2) includes the connector member described in (1), in which a material of the friction imparting member is rubber.

In the connector member, since the material of the friction imparting member is rubber, the friction imparting member can easily and reliably impart friction force to the optical fiber.

The present invention (3) includes the connector member described in (1) or (2), in which the friction imparting member includes a first friction imparting sheet; and a second friction imparting sheet disposed at an opposite side to the first friction imparting sheet with respect to the optical fiber.

In the connector member, the clamping member can securely fix the optical fiber via these two friction imparting members.

The present invention (4) includes the connector member described in any one of (1) to (3), in which the clamping member includes a body; and a lid, and the optical fiber is clamped between the body and the lid.

In the connector member, the clamping member, although having a simple configuration, can fix the optical fiber.

The present invention (5) includes the connector member described in any one of (1) to (4), further including a ferrule that is housed in the clamping member and fixes one end portion in the longitudinal direction of the fiber.

In the connector member, the ferrule can securely fix one end portion in the longitudinal direction of the optical fiber.

The present invention (6) includes the connector member described in any one of (1) to (5), in which the optical fiber includes a plastic optical fiber.

The present invention (7) includes an assembly method for a connector member that fixes an optical fiber, the assembly method including the steps of: disposing a first friction imparting sheet on a body; disposing the optical fiber on the first friction imparting sheet; disposing a second friction imparting sheet on the optical fiber; and disposing a lid on the body, so that the body and the lid clamp the optical fiber via the first friction imparting sheet and the second friction imparting sheet.

In the assembly method, since the body and the lid clamp the optical fiber via the first friction imparting sheet and the second friction imparting sheet, the optical fiber can be conveniently fixed.

The present invention (8) includes the connector member described in (7), in which the optical fiber is a plastic optical fiber.

The plastic optical fiber has excellent bending resistance. For this reason, in a second step, it is possible to suppress breakage caused by bending of the optical fiber. Therefore, the second step of the assembly method can be conveniently performed.

### EFFECTS OF THE INVENTION

The connector member of the present invention has a simple configuration.

According to the assembly method for the connector member of the present invention, the optical fiber can be conveniently fixed.

### BRIEF DESCRIPTION OF THE DRAWINGS

FIGS. 1A to 1C are side cross sectional views of steps illustrating an assembly method for one embodiment of a connector member of the present invention: FIG. 1A illustrates a first step, FIG. 1B illustrates a second step, and FIG. 1C illustrates a third step and a fourth step.
FIGS. 2A to 2B are plan views corresponding to the assembly method illustrated in FIGS. 1A to 1C: FIG. 2A illustrates a first step, and FIG. 2B illustrates a second step.
FIGS. 3A to 3C are front cross sectional views corresponding to the assembly method illustrated in FIGS. 1A to 2B: FIG. 3A illustrates a first step, FIG. 3B illustrates a second step, and FIG. 3C illustrates a third step and a fourth step.

### DESCRIPTION OF THE EMBODIMENTS

### <One embodiment of connector member>

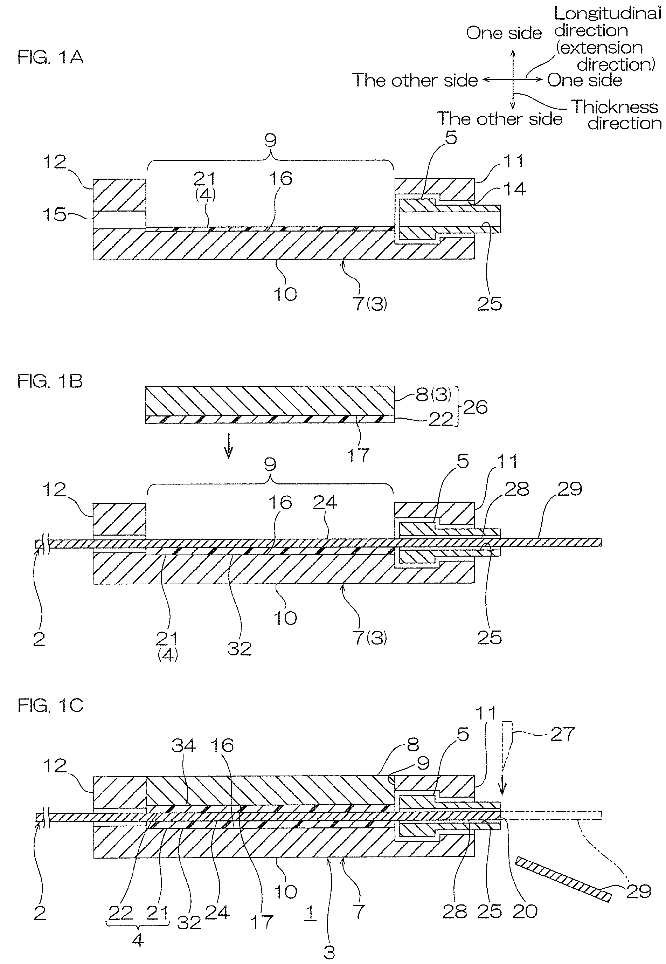

One embodiment of the connector member of the present invention will be described with reference to FIGS. 1A to 3C.

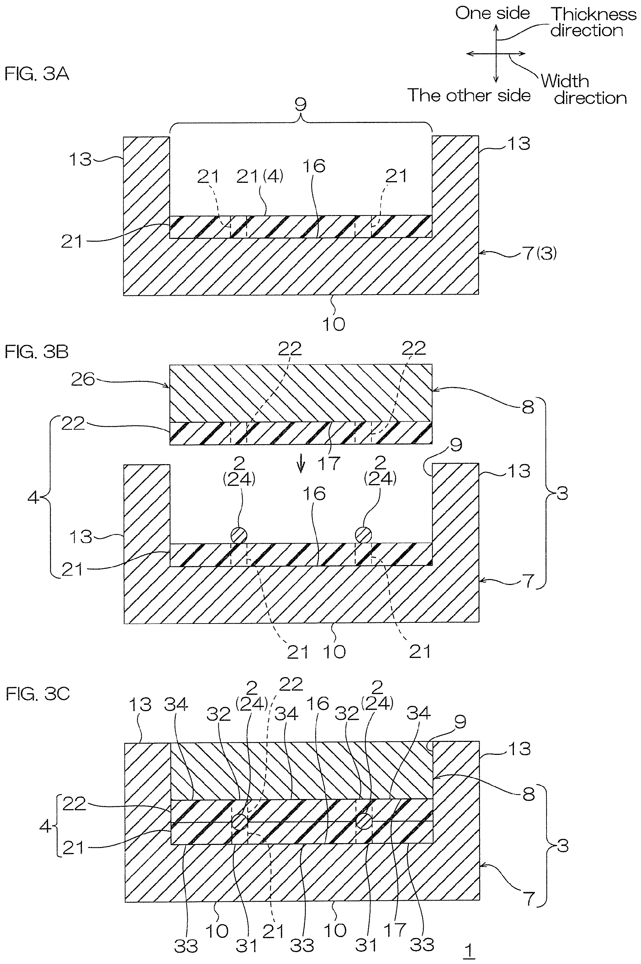

As shown in FIGS. 1C and 3C, a connector member 1 fixes a plurality of (two) optical fibers 2. The connector member 1 is configured to optically connect the plurality of optical fibers 2 to an optical cable (not shown). The connector member 1 includes the plurality of optical fibers 2, a clamping member 3, a friction imparting member 4, and a plurality of (two) ferrules 5.

### <Optical fiber>

The plurality of optical fibers 2 each have, for example, a generally cylindrical column shape. The plurality of optical fibers 2 each include a core (not shown), a clad (not shown) disposed on a peripheral surface of the core, and a coating layer (not shown) disposed on a peripheral surface of the clad. The core, the clad, and the coating layer are sequentially disposed outward in a direction orthogonal to a longitudinal direction of the optical fiber 2.

The refractive index of the core is higher than that of the clad. Examples of materials of the core and the clad include transparent materials such as plastics and ceramics. Examples of the plastics include resins such acrylic resin and epoxy resin. Examples of the ceramics include quartz and glass. As the material of the core and the clad, plastic is preferably used. When the material of the core and the clad is a plastic, the core and the clad form a plastic optical fiber. The plastic optical fiber has excellent bending resistance. For this reason, at the time of laying the optical fiber 2 including the plastic optical fiber, it is possible to suppress breakage caused by bending of the optical fiber 2. Therefore, in an assembly method to be described later, handling of the optical fiber 2 is made easy, so that the connector member 1 can be conveniently assembled. Examples of a material of the coating layer include vinyl chloride resin. The optical fiber 2 has a diameter of, for example, 100 µm or more, preferably 200 µm or more, and for example, 1000 µm or less, preferably 700 µm or less.

### <Clamping member>

As shown in FIGS. 1B and 3B, the clamping member 3 houses one side portion 24 in the longitudinal direction of the optical fiber 2. As the clamping member 3, for example, a housing is exemplified. Specifically, the clamping member 3 include a clamping body 7 as an example of a body, and a clamping lid 8 as an example of a lid.

As shown in FIGS. 1A and 3A, the clamping body 7 has a generally rectangular box shape that is open to one side. The clamping body 7 integrally has a bottom wall 10, a first insertion wall 11, a second insertion wall 12, and both side walls 13.

The bottom wall 10 has a generally rectangular plate shape extending along the longitudinal direction of the optical fiber 2. The bottom wall 10 has one thicknesswise surface 16.

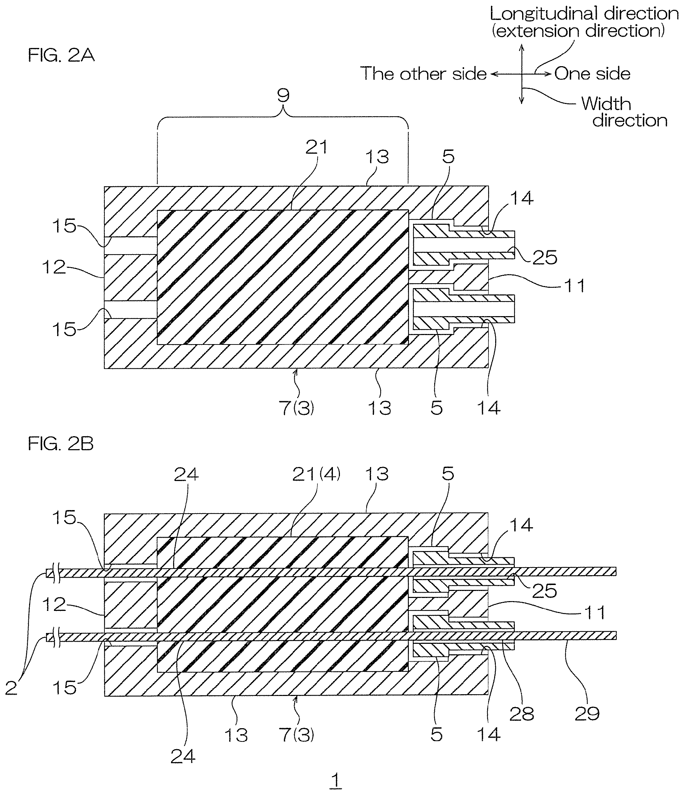

As shown in FIG. 1A, the first insertion wall 11 has a generally rectangular flat plate shape extending from one end portion in the longitudinal direction of the bottom wall 10 toward one side in the thickness direction of the bottom wall 10. As shown in FIG. 2A, the first insertion wall 11 has a plurality of (two) first through holes 14. The first through hole 14 penetrates the first insertion wall 11 in the thickness direction. The penetrating direction of the first through hole 14 corresponds to the direction in which the optical fiber 2 extends. The ferrule 5 to be described later is inserted in the first through hole 14.

As shown in FIG. 1A, the second insertion wall 12 is opposed at a spaced interval to the first insertion wall 11 on the other side in the longitudinal direction. The second insertion wall 12 has a generally rectangular flat plate shape extending from the other end portion in the longitudinal direction of the bottom wall 10 toward one side in the thickness direction of the bottom wall 10. As shown in FIG. 2A, the second insertion wall 12 has a plurality of (two) second through holes 15. The second through holes 15 penetrates the second insertion wall 12 in the thickness direction. As shown in FIG. 2B, the optical fiber 2 is inserted in the second through hole 15. The penetrating direction of the second through hole 15 corresponds to the direction in which the one side portion 24 of the optical fiber 2 extends. When projected in the direction in which the optical fiber 2 extends, the second through hole 15 overlaps the first through hole 14.

As shown in FIGS. 2A and 3A, both side walls 13 are disposed at both end portions in a width direction of the bottom wall 10. The width direction is a direction orthogonal to the direction in which the optical fiber 2 extends and to the thickness direction of the bottom wall 10. Each of the both side walls 13 extends from each of the both end portions in the width direction of the bottom wall 10 toward one side in the thickness direction. Each of the both side walls 13 has a generally rectangular plate shape along the longitudinal direction of the optical fiber 2.

As shown in FIGS. 1A and 3A, in the clamping body 7, a housing portion 9 is compartmented by the bottom wall 10 and the first insertion wall 11, and by the second insertion wall 12 and the both side walls 13. Specifically, the housing portion 9 is open toward one side in the thickness direction of the clamping body 7. The housing portion 9 is in communication with the outside through the first through hole 14 and the second through hole 15.

As shown in the upper drawing of FIG. 1B and the upper drawing of FIG. 3B, the clamping lid 8 has a generally rectangular flat plate shape along the longitudinal direction of the optical fiber 2. As shown in FIGS. 1C and 3C, the clamping lid 8 is housed in the housing portion 9. The clamping lid 8 has the other thicknesswise surface 17 that faces the one thicknesswise surface 16 of the bottom wall 10 in the thickness direction. The other thicknesswise surface 17 of the clamping lid 8 is parallel to the one thicknesswise surface 16 of the bottom wall 10.

The clamping lid 8 has substantially the same size as the housing portion 9 in plan view. For this reason, the peripheral side wall of the clamping lid 8 has portions in contact with inside surfaces of the first insertion wall 11, the second insertion wall 12, and the both side walls 13. Since the peripheral side wall of the clamping body 8 has the above-described portions, the clamping lid 8 can prevent detachment from the housing portion 9, thereby allowing the clamping lid 8 to apply pressure to the friction imparting member 4.

The material of the clamping member 3 is, for example, a hard material. Specific examples of the material of the clamping member 3 include hard resins such as acrylic resin and polyolefin resin, and metals such as stainless steel and nickel, and preferably a hard resin is used. The clamping member 3 has a Young's modulus at 25°C of, for example, more than 0.1 GPa, preferably 0.5 GPa or more, more preferably 1 GPa or more, and for example, 1000 GPa or less.

### <Friction imparting member>

As shown in FIGS. 1C and 3C, the friction imparting member 4 is housed in the housing portion 9. The friction imparting member 4 includes a first friction imparting sheet 21 and a second friction imparting sheet 22. Preferably, the friction imparting member 4 includes only the first friction imparting sheet 21 and the second friction imparting sheet 22.

As shown in FIG. 2A, the first friction imparting sheet 21 has a generally flat plate shape. The first friction imparting sheet 21 has substantially the same size as the housing portion 9 in plan view. As shown in FIGS. 1A and 3A, the first friction imparting sheet 21 is disposed on the bottom wall 10. Specifically, the first friction imparting sheet 21 is in contact with the entire one thicknesswise surface 16 of the bottom wall 10.

As shown in FIGS. 1C and 3C, the second friction imparting sheet 22 is disposed on the clamping lid 8. Specifically, the second friction imparting sheet 22 is in contact with the entire other thicknesswise surface 17 of the clamping lid 8. The second friction imparting sheet 22 has the same shape as the first friction imparting sheet 21.

Further, the friction imparting member 4 is also disposed against the optical fiber 2. The friction imparting member 4 embeds the plurality of optical fibers 2 in cross section orthogonal to the longitudinal direction, as shown in FIG. 3C. Specifically, the first friction imparting sheet 21 comes into (firmly) contact with bottom wall side portions on the respective peripheral surfaces of the plurality of optical fibers 2. The second friction imparting sheet 22 comes into (firmly) contact with lid side portions on the respective peripheral surfaces of the plurality of optical fibers 2. In cross section, a portion (first outside portion) 33 located outside from a portion (first contact portion) 31 in contact with the plurality of optical fibers 2 in the first friction imparting sheet 21 and a portion (second outside portion) 34 located outside from a portion (second contact portion) 32 in contact with the plurality of optical fibers 2 in the second friction imparting sheet 22 come into contact with each other.

The first friction imparting sheet 21 and the second friction imparting sheet 22 are, for example, elastic sheets. Examples of a material of the friction imparting member 4 include elastic materials such as rubber, and preferably, rubber is used. When the material of the friction imparting member 4 is rubber, the friction imparting member 4 can easily and reliably impart friction force to the optical fiber 2. The kind of rubber is not particularly limited, and examples thereof include acrylic rubber and urethane rubber. The friction imparting member 4 has a Young's modulus at 25°C of, for example, 0.01 MPa or more, preferably 0.1 MPa or more, and for example, 100 MPa or less, preferably 50 MPa or less. Each of the first friction imparting sheet 21 and the second friction imparting sheet 22 has a thickness of, for example, 300 µm or more, preferably 500 µm or more, and for example, 2000 µm or less, preferably 1000 µm or less. A ratio of the thickness of the first friction imparting sheet 21 to the diameter of the optical fiber 2 is, for example, 0.6 or more, preferably 1 or more, and for example, 4 or less, preferably 2 or less. A ratio of the thickness of the second friction imparting sheet 22 to the diameter of the optical fiber 2 is the same as the ratio of the thickness of the first friction imparting sheet 21 to the diameter of the optical fiber 2. When the ratios and the thicknesses of the first friction imparting sheet 21 and the second friction imparting sheet 22 are within the above-described range, the clamping member 3 can securely fix the optical fiber 2 via the friction imparting member 4.

### <F errul e>

As shown in FIG. 2B, each of the plurality of ferrules 5 is housed in the first through hole 14 in the first insertion wall 11. The ferrule 5 has a cylindrical shape with its axis along the longitudinal direction of the optical fiber 2. The axis of the ferrule 5 is in common with the axis of the first through hole 14. The ferrule 5 has a hole 25. One end portion in the longitudinal direction of the optical fiber 2 is inserted in the hole 25. The ferrule 5 may be fixed to the first insertion wall 11 or may be allowed to move within 1 mm with respect to the first insertion wall 11. One end portion in the longitudinal direction of the ferrule 5 protrudes toward one direction from the first insertion wall 11. As a material of the ferrule 5, the hard material exemplified for the clamping member 3 is used.

### <Disposition order of members and fixing of optical fiber>

As shown in FIGS. 1C and 3C, in the cross section where the optical fiber 2 passes through, the bottom wall 10, the first friction imparting sheet 21, the optical fiber 2, the second friction imparting sheet 22, and the clamping lid 8 are sequentially disposed toward one side in the thickness direction.

The clamping lid 8 is applying pressure to the bottom wall 10 of the clamping body 7. The pressure is not particularly limited and is, for example, 100 Pa or more, preferably 1 kPa or more, more preferably 10 kPa or more, and for example, 100 kPa or less. Thus, the clamping member 3 clamps the optical fiber 2 via the friction imparting member 4. Specifically, the bottom wall 10 and the clamping lid 8 apply pressure to the optical fiber 2 via the first friction imparting sheet 21 and the second friction imparting sheet 22. This allows friction force that prevents the optical fiber 2 from moving in the longitudinal direction to be imparted to the optical fiber 2.

### <Assembly method for connector member>

Next, the assembly method for the connector member 1 will be described.

This assembly method includes a first step, a second step, a third step, and a fourth step.

As shown in FIGS. 1A, 2A, and 3A, in the first step, the first friction imparting sheet 21 is disposed on the clamping body 7. Specifically, the first friction imparting sheet 21 is placed on the one thicknesswise surface 16 of the bottom wall 10 in the housing portion 9. In addition, in the first step, the ferrule 5 is disposed in the first through hole 14 in the clamping body 7.

As shown in FIGS. 1B, 2B, and 3B, in the second step, the plurality of optical fibers 2 are disposed on the first friction imparting sheet 21. Specifically, the one side portion 24 of each of the plurality of optical fibers 2 is sequentially inserted into each of the plurality of second through holes 15 and each of the plurality of holes 25. At this time, the optical fiber 2 is inserted into the hole 25 so that the one side portion 24 has a base end portion 28 covered with the ferrule 5 and a free end portion 29 exposed from the ferrule 5. The one side portion 24 of the optical fiber 2 is disposed on the first friction imparting sheet 21. Specifically, the bottom wall side portion on the peripheral surface of the optical fiber 2 faces one surface in the thickness direction of the first friction imparting sheet 21. Specifically, the bottom wall side portion of the optical fiber 2 may contact one surface in the thickness direction of the first friction imparting sheet 21, or may be spaced a very short distance therefrom.

In the present embodiment, the third step and the fourth step are simultaneously performed. As shown in FIGS. 1C and 3C, in the third step, the second friction imparting sheet 22 is disposed on the plurality of optical fibers 2. In the fourth step, the clamping lid 8 is disposed on the clamping body 7.

As shown in the upper drawings of FIGS. 1B and 3B, first, the second friction imparting sheet 22 is laminated on the other thicknesswise surface 17 of the clamping lid 8 to prepare a sheet-attached lid member 26. The sheet-attached lid member 26 includes the second friction imparting sheet 22 and the clamping lid 8. An adhesive layer (not shown) interposed between the second friction imparting sheet 22 and the clamping lid 8 may be provided in the sheet-attached lid member 26.

Subsequently, as indicated by arrows in FIGS. 1B and 3B, and solid lines in FIGS. 1C and 3C, the sheet-attached lid member 26 is disposed on the housing portion 9. Specifically, the sheet-attached lid member 26 is fitted and/or pushed in the housing portion 9. In this manner, the third step is performed by disposing the second friction imparting sheet 22 on the plurality of optical fibers 2. For example, the first friction imparting sheet 21 and the second friction imparting sheet 22 are elastically deformed to embed the optical fiber 2. Specifically, in a portion (a first contact portion 31 to be described later) where the first friction imparting sheet 21 is in contact with the optical fiber 2, the first friction imparting sheet 21 is recessed toward the bottom wall 10 side. In a portion (a second contact portion 32 to be described later) where the second friction imparting sheet 22 is in contact with the optical fiber 2, the second friction imparting sheet 22 is recessed toward the clamping lid 8 side.

At the same time, the fourth step is performed by disposing the clamping lid 8 on the clamping body 7. The clamping lid 8 is fitted and/or pushed in the housing portion 9. In this manner, the clamping lid 8 applies pressure to the friction imparting member 4. Therefore, the clamping member 3 clamps the plurality of optical fibers 2 via the friction imparting member 4.

Thus, the connector member 1 is assembled.

Thereafter, as required, the free end portion 29 is cut with, for example, a cutting member 27 such as a cutter. In this manner, one longitudinal end surfaces 20 of the plurality of optical fibers 2 and one end surface of the ferrule 5 are made flush with each other.

Thereafter, the plurality of optical fibers 2 of the connector member 1 are optically connected to a plurality of optical cables (not shown).

### <Function and effect of one embodiment>

In the connector member 1, the friction imparting member 4 can impart friction force to the plurality of optical fibers 2, the friction force preventing the optical fibers 2 from moving in the longitudinal direction. This allows the clamping member 3 to securely fix the optical fibers 2. Further, the connector member 1 has a simple configuration that includes the clamping member 3 and the friction imparting member 4, as compared with the optical connector of Patent Document 1, that includes a temporarily fixing member, a fixing member, and a nut.

In the connector member 1, when the material of the friction imparting member 4 is rubber, the friction imparting member 4 can easily and reliably impart friction force to the optical fiber 2.

In the connector member 1, the clamping member 3 can securely fix the optical fiber 2 via two friction imparting members 4.

Further, in the connector member 1, the clamping member 3, although having a simple configuration, can fix the optical fiber 2.

Furthermore, in the connector member 1, the ferrule 5 can securely fix the base end portion 28 of the one side portion 24 of the optical fiber 2.

In the above-described assembly method for the connector member 1, the bottom wall 10 of the clamping body 7 and the clamping lid 8 clamp the plurality of optical fibers 2 via the first friction imparting sheet 21 and the second friction imparting sheet 22. This allows the clamping lid 3 to apply pressure to the friction imparting member 4. As a result, the plurality of optical fibers 2 can be conveniently fixed.

The plastic optical fiber suitably included in the optical fiber 2 has excellent bending resistance. For this reason, at the time of disposing the optical fiber 2 on the first friction imparting sheet 21 in the second step, it is possible to suppress breakage caused by bending of the optical fiber 2. Therefore, in the assembly method to be described later, handling of the optical fiber 2 is made easy. As a result, the connector member 1 can be conveniently assembled.

### <Modified Examples>

In the following modified examples, the same reference numerals are provided for members and steps corresponding to each of those in one embodiment described above, and their detailed description is omitted. Further, the modified examples can achieve the same function and effect as that of one embodiment unless otherwise specified. Furthermore, one embodiment and the modified example thereof can be appropriately used in combination.

Though not shown, in the connector member 1, the number of optical fibers 2 may be 1. When the number of optical fibers 2 is 1, the number of first through holes 14, the number of second through holes 15, and the number of ferrules 5 are also 1.

Though not shown, the friction imparting member 4 does not include both the first friction imparting sheet 21 and the second friction imparting sheet 22 but may include only one of the first friction imparting sheet 21 and the second friction imparting sheet 22. Preferably, the friction imparting member 4 includes both the first friction imparting sheet 21 and the second friction imparting sheet 22. Thus, the friction imparting member 4, although having a simple configuration, can reliably impart friction force to the optical fiber 2, the friction force preventing movement of the optical fiber 2.

Though not shown, the first friction imparting sheet 21 and the second friction imparting sheet 22 may be each disposed in a part of the longitudinal direction in the housing portion 9. Preferably, the first friction imparting sheet 21 and the second friction imparting sheet 22 are each disposed throughout the longitudinal direction in the housing portion 9. Thus, the friction imparting member 4 can reliably impart friction force to the optical fiber 2, the friction force preventing movement of the optical fiber 2.

As indicated by phantom lines in FIGS. 3A to 3C, the first friction imparting sheet 21 may have the first contact portion 31 alone without having the first outside portion 33. The second friction imparting sheet 22 may have the second contact portion 32 alone without having the second outside portion 34.

In this modified example, the first friction imparting sheet 21 and the second friction imparting sheet 22 each have a strip shape along the longitudinal direction of the optical fiber 2.

Preferably, the first friction imparting sheet 21 has the first outside portion 33 and the first contact portion 31, and has a sheet shape extending in the width direction along the bottom wall 10. This allows the optical fiber 2 to be conveniently and securely disposed against the first friction imparting sheet 21 in the second step.

Preferably, the second friction imparting sheet 22 has the second outside portion 34 and the second contact portion 32, and has a sheet shape extending in the width direction along the clamping lid 8. This allows the second friction imparting sheet 22 to be conveniently and securely disposed against the optical fiber 2 in the third step.

If the first friction imparting sheet 21 further has the first outside portion 33 and the second friction imparting sheet 22 further has the second outside portion 34, the assembly method for the connector member 1 may be made convenient. On the other hand, if the first friction imparting sheet 21 and the second friction imparting sheet 22 each have a strip shape, the above-described second and third steps cannot be securely performed, so that the assembly method may become complicated.

The clamping member 3 may have a square cylindrical shape extending along the longitudinal direction of the optical fiber 2 without separately including the clamping body 7 and the clamping lid 8.

Preferably, the clamping member 3 separately includes the clamping body 7 and the clamping lid 8. This allows the clamping member 3 to conveniently and securely apply pressure to the optical fiber 2 via the friction imparting member 4 in the thickness direction, thereby conveniently and securely fixing the optical fiber 2.

As the friction imparting member 4, instead of or in addition to the first friction imparting sheet 21 and the second friction imparting sheet 22, a high friction treatment unit may be provided on at least one of the peripheral surface of the optical fiber 2, one thicknesswise surface 16 of the bottom wall 10, and the other thicknesswise surface 17 of the clamping lid 8. As the high friction treatment unit, for example, a roughening treatment unit is used.

In the assembly method, the third step and the fourth step may be sequentially performed. Though not shown, first, the second friction imparting sheet 21 is disposed against the optical fiber 2 and the first friction imparting sheet 22, and thereafter, the clamping lid 8 may be disposed against the second friction imparting sheet 22.

While the illustrative embodiments of the present invention are provided in the above description, such is for illustrative purpose only and it is not to be construed restrictively. Modification and variation of the present invention that will be obvious to those skilled in the art is to be covered by the following claims.

### Industrial Applicability

A connector member is configured to fix an optical fiber.

### Description of Reference Numerals

- 1: connector member
- 2: optical fiber (plastic optical fiber)
- 3: clamping member
- 4: friction imparting member
- 5: ferrule
- 21: first friction imparting sheet
- 22: second friction imparting sheet

## Claims

1. A connector member that fixes an optical fiber, the connector member comprising:
the optical fiber;
a clamping member that clamps the optical fiber; and
a friction imparting member interposed between the optical fiber and the clamping member, the friction imparting member configured to impart friction force to the optical fiber, the friction force preventing the optical fiber from moving in a longitudinal direction.

2. The connector member according to claim 1, wherein a material of the friction imparting member is rubber.

3. The connector member according to claim 1 or 2, wherein
the friction imparting member comprises:
a first friction imparting sheet; and
a second friction imparting sheet disposed at an opposite side to the first friction imparting sheet with respect to the optical fiber.

4. The connector member according to any one of claims 1 to 3, wherein
the clamping member comprises a body; and a lid, and
the optical fiber is clamped between the body and the lid.

5. The connector member according to any one of claims 1 to 4, further comprising a ferrule that is housed in the clamping member and fixes one end portion in the longitudinal direction of the fiber.

6. The connector member according to any one of claims 1 to 5, wherein the optical fiber comprises a plastic optical fiber.

7. An assembly method for a connector member that fixes an optical fiber, the assembly method comprising the steps of:
disposing a first friction imparting sheet on a body;
disposing the optical fiber on the first friction imparting sheet;
disposing a second friction imparting sheet on the optical fiber; and
disposing a lid on the body, so that the body and the lid clamp the optical fiber via the first friction imparting sheet and the second friction imparting sheet.

8. The assembly method for the connector member according to claim 7, wherein the optical fiber comprises a plastic optical fiber.
